# EUROPÄISCHE PATENTANMELDUNG

(11) **EP 0 940 528 A1**
(43) Veröffentlichungstag der Anmeldung: **08.09.1999**
(21) Anmeldenummer: 99104125.2
(22) Anmeldetag: 02.03.1999
(51) Int. Cl.: E04H 1/12, F16B 12/42, F16B 2/06

(54) **Plattenhalter**

(30) Priorität: 04.03.1998 DE 29803703 U
(71) Anmelder: HEWI Heinrich Wilke GmbH, 34454 Bad Arolsen (DE)
(72) Erfinder: De Backer, Gerard, 34454 Bad Arolsen (DE)
(74) Vertreter: Freiherr von Schorlemer, Reinfried, Dipl.-Phys.

(57) **Zusammenfassung**

Es wird ein Plattenhalter mit wenigstens zwei Klemmelementen (1,1a) beschrieben, die einen Aufnahmespalt für eine Platte (62) begrenzende Klemmflächen aufweisen. Erfindungsgemäß sind die Klemmelemente (1,1a) an zur Einstellung der Dicke des Aufnahmespalts bestimmten, scherenartig miteinander verbundenen, je zwei Arme aufweisenden Hebeln montiert und die Hebel um eine im wesentlichen parallel zu den Klemmflächen und zwischen diesen verlaufende Schwenkachse schwenkbar miteinander verbunden.

## Beschreibung

Die Erfindung betrifft einen Plattenhalter der im Oberbegriff des Anspruchs 1 angegebenen Gattung.

Plattenhalter dieser Art sind in zahlreichen Formen und Größen bekannt (DE 30 01 085 A1, DE 35 07 158 C2). Sie dienen unter anderem zur Befestigung von Platten an ebenen Flächen, an Treppengeländern oder ach an aus Rohren oder Stangen zusammengesetzten Systemen verschiedener Art wie z.B. Messeständen.

Bei den bekannten Plattenhaltern wird vorausgesetzt, daß die Dicke der zu montierenden Platten im wesentlichen immer gleich ist und allenfalls im Rahmen der üblichen Toleranzen schwankt. Die bekannten Plattenhalter weisen daher einen Aufnahmespalt auf, der eine an die verwendete Plattenstärke angepaßte Dicke besitzt. Zum Ausgleich von üblichen Platten- oder sonstigen Fertigungstoleranzen weist eines der Klemmelemente eine in den Aufnahmespalt vorschiebbare Klemmschraube oder Klemmscheibe auf, um die Platte dadurch zwischen dieser und der gegenüberliegenden Klemmfläche fest einspannen zu können.

Ein weiteres wichtiges Anwendungsgebiet der beschriebenen Plattenhalter ergibt sich in Verbindung mit Trennwandsystemen, die zur Herstellung von WC-, Umkleide- oder Duschkabinen od. dgl. ans vorgefertigten, plattenförmigen Wandelementen dienen, die an der Baustelle mit wenigen Handgriffen aneinandergefügt werden können. Die Plattenhalter sind dabei entweder an Fußteilen, mittels derer die Unterkanten der Wandelemente am Erdboden abgestützt werden, oder an Deckenteilen befestigt, mittels derer die Oberkanten der Wandelemente mit einem oberhalb der Kabinen od. dgl. montierten, horizontalen Träger verbunden werden. In einem solchen Anwendungsfall sind häufig Wandelemente mit stark schwankenden, z. B. zwischen 10 mm und 30 mm schwankenden Wandstärken vorhanden, die mit den üblichen Klemmschrauben oder Klemmscheiben nicht ausgeglichen werden können. Bei derartigen Aßwendungen ist es daher bisher erforderlich, Plattenhalter mit unterschiedlich dicken Aufnahmespalten zur Verfügung zu stellen, was insbesondere aus Gründen der Herstellungs- und Lagerkosten unerwünscht ist.

Der Erfindung liegt daher die Aufgabe zugrunde, den Plattenhalter der eingangs bezeichneten Gattung so auszubilden, daß die Dicke seines Aufnahmespalts einstellbar und zur Aufnahme von Platten bzw. Wandelementen geeignet ist, deren Dicken vergleichsweise großen Schwankungen unterworfen sein können oder sollen. Dabei soll die Anordnung außerdem derart sein, daß sich mit vergleichsweise geringem konstruktivem Aufwand einerseits eine geringe Baugröße und andererseits ein formschönes Aussehen des Plattenhalters insgesamt erzielen läßt und unabhängig von der gewählten Einstellung von außen möglichst keine Konstruktionselemente sichtbar sind.

Zur lösung dieser Aufgabe dienen die kennzeichnenden Merkmale des Anspruchs 1.

Weitere vorteilhafte Merkmale der Erfindung ergeben sich aus den Unteransprüchen.

Die Erfindung wird nachfolgend in Verbindung mit der beiliegenden Zeichnung an einem Ausführungsbeispiel näher erläutert. Es zeigen:
Fig. 1 die Vorderansicht eines Klemmelements eines erfindungsgemäßen Plattenhalters;
Fig. 2 einen Schnitt längs der Linie II-II der Fig. 1;
Fig. 3 die Draufsicht des Klemmelements nach Fig. 1;
Fig. 4 die Unteransicht eines ersten Hebels des erfindungsgemäßen Plattenhalters;
Fig. 5 eine Vorderansicht des Hebels nach Fig. 4;
Fig. 6 einen Schnitt längs der Linie VI-VI der Fig. 4;
Fig. 7 und 8 je eine Draufsicht und Vorderansicht eines zweiten Hebels des erfindungsgemäßen Platterhalters;
Fig. 9 die Draufsicht auf die beiden Hebel gemäß Fig. 4 und 7 nach Bildung eines Scherengelenks;
Fig. 10 die Vorderansicht einer aus zwei Klemmelementen und zwei Hebein bestehenden Baueinheit des erfindungsgemäßen Plattenhalters;
Fig. 11 einen Schnitt längs der Linie XI-XI der Fig. 10;
Fig. 12 und 13 die Unteransichten der Baueinheit nach Fig. 10 und 11 in zwei unterschiedlichen Einstellungen eines Aufnahmespalts;
Fig. 14 die Vorderansicht einer Abdeckkappe des erfindungsgemäßen Platterhalters;
Fig. 15 eine Seitenansicht der Abdeckkappe nach Fig. 14;
Fig. 16 und 17 Schnitte längs der Linien XVI-XVI und XVII-XVII der Fig. 14;
Fig. 18 und 19 eine Draufsicht und eine Vorderansicht eines Führungsteils des erfindungsgemäßen Plattenhalters;
Fig. 20 einen Schnitt längs der Linie XX-XX der Fig. 18;
Fig. 21 einen Längsschnitt durch ein Tragteil des erfindungsgemäßen Plattenhalters;
Fig. 22 die Draufsicht auf das Tragteil nach Fig. 21 mit eingesetzten Führungsteilen nach Fig. 18 bis 20;
Fig. 23 eine teilweise geschnittene Vorderansicht des kompletten, eine Platte tragenden Plattenhalters im zusammengesetzten Zustand; und
Fig. 24 und 25 Seitenansichten des Plattenhalters nach Fig. 23 in seiner Einstellung für zwei unterschiedlich dicke Platten.

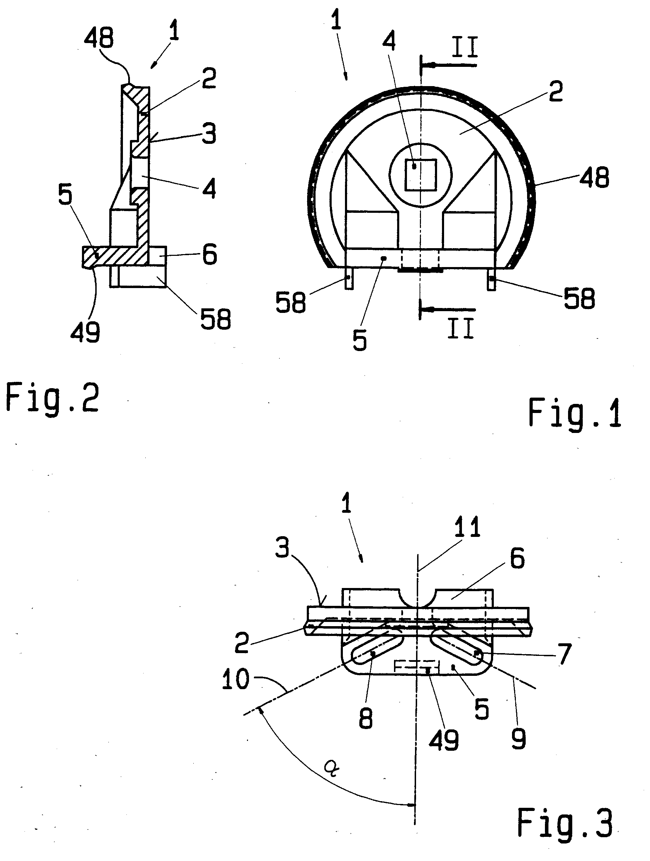

Ein Klemmelement 1 (Fig. 1 bis 3) eines erfindungsgemäßen Plattenhalters enthält nach einer besonders bevorzugten Ausführungsform eine im wesentlichen planparallele Scheibe 2 mit einer ebenen Klemmfläche 3, wobei in der Mitte der Scheibe 2 ein Loch 4 mit quadratischem Querschnitt ausgebildet ist. In einem unteren Abschnitt besitzt das Klemmelement 1 einerseits einen Fußabschnitt 5, der z.B. senkrecht zur Klemmfläche 3 nach außen absteht, und andererseits eine z.B. senkrecht von der Klemmfläche 5 nach innen ragende Auflageschulter 6 für eine Platte.

Wie insbesondere Fig. 3 zeigt, sind im Klemmelement 1, vorzugsweise in seinem Fußabschnitt 5, zwei längliche Führungen 7 und 8 ausgebildet, die vorzugsweise ans Geradführungen bestehen und Längsachsen 9 und 10 aufweisen. Die Führungen 7 und 8 sind V-förmig angeordnet und spiegelsymmetrisch zu einer senkrecht zur Klemmfläche 3 verlaufenden Mittelebene 11 angeordnet, wobei die Spitze der V-Form der Scheibe 2 zugewandt ist. Beide Führungen 7 und 8 bestehen im Ausführungsbeispiel aus Langlöchern, wobei die Achsen 9 und 10 jeweils Winkel α von z.B. 45° bis 60° mit der Mittelebene 11 einschließen.

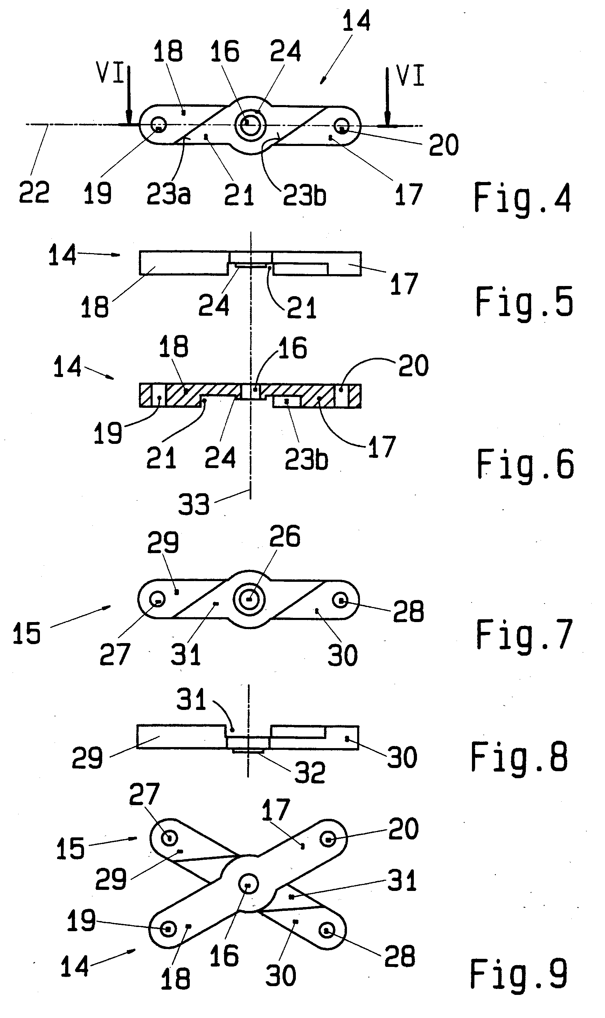

Das Klemmelement 1 wird im erfindungsgemäßen Plattenhalter auf Hebeln 14,15 (Fig. 4 bis 9) montiert, die nach Art eines Scherengelenks miteinander verbunden werden.

Der längliche, eine flachovale Kontur aufweisende Hebel 14 enthält ein kreisrundes Mittelloch 16, von dem zwei Arme 17,18 ausgehen, in denen ebenfalls je ein Loch 19,20 ausgebildet ist. Außerdem weist der Hebel 14 eine in seiner Unterseite ausgebildete Ausnehmung 21 auf, die von schräg zu einer Längsachse 22 des Hebels 14 und parallel zueinander verlaufenden Seitenwänden 23a,23b begrenzt und zu den Seiten des Hebels 14 hin offen ist. Außerdem ist der Hebel 14 an seiner Unterseite mit einem zylindrischen, das Mittelloch 16 umgebenden Kragen 24 versehen.

Der Hebel 15 ist nach Fig. 7 und 8 im wesentlichen wie der Hebel 14 ausgebildet und mit einem kreisrunden Mittelloch 26, zwei Löcher 27,28 aufweisenden Armen 29 und 30, einer mittleren Ausnehmung 31 und einem nach außen ragenden Kragen 32 versehen. Im übrigen entspricht der Hebel 15 im wesentlichen dem Hebel 14. Ein Unterschied besteht nur darin, daß die Ausnehmung 31 in der oberen anstatt in der unteren Oberfläche des Hebels 15 ausgebildet ist. Außerdem besitzt das Mittelloch 26 am oberen Ende eine Senkung mit einem Durchmesser, der dem Außendürchmesser des Kragens 24 des Hebels 14 entspricht.

Im montierten Zustand des erfindungsgemäßen Plattenhalters befinden sich die Hebel 14,15 unter Bildung eines Scherengelenks in der aus Fig. 9 ersichtlichen Weise in Anlage. Dabei liegt der Kragen 24 des Hebels 14 koaxial in der Senkung des Mittellochs 26 des Hebels 15, und der Hebel 14 liegt gleichzeitig mit seinem die Ausnehmung 21 aufweisenden Abschnitt so in der Ausnehmung 31 des Hebels 15, daß beide um eine durch die Mittellöcher 24,26 gelegte, in Fig. 5,6 und 8 schematisch angedeutete Schwenkachse 33 scherenartig relativ zueinander gedreht werden können. Die beiden Ausnehmungen 21,31 dienen dabei dem Zweck, daß die Dicke des so gebildeten Scherengelenks nicht größer als die Dicke eines der beiden Hebel 14,15 ist und eine kleine Bauhöhe erzielt wird.

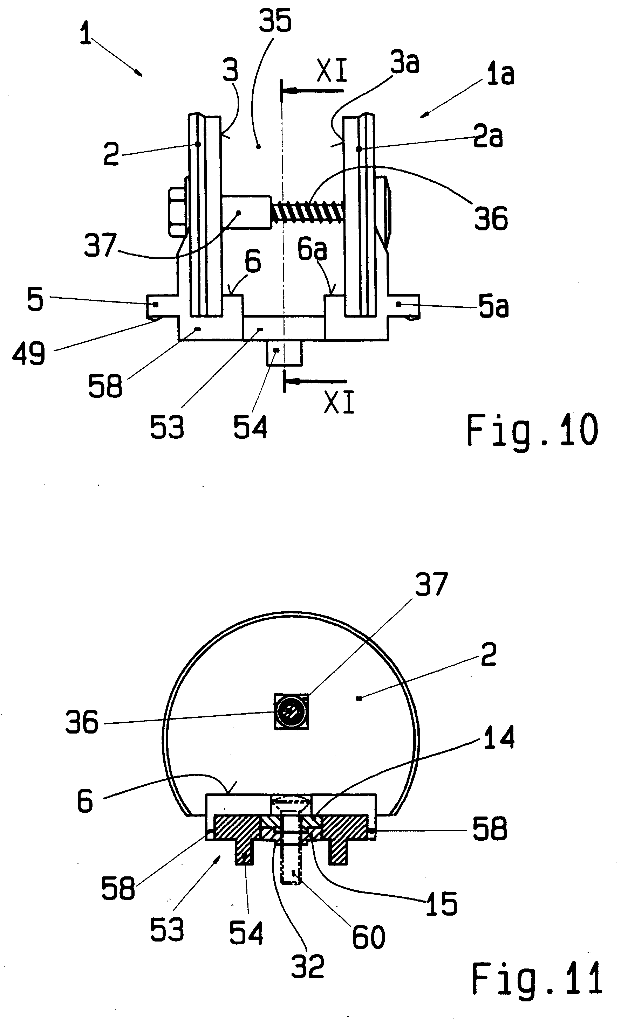

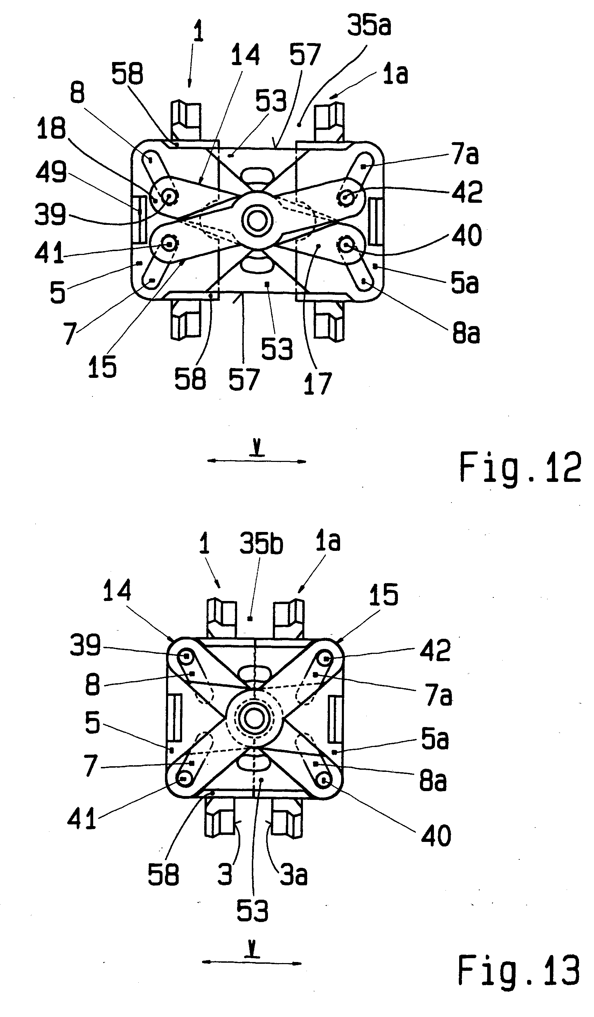

Zur Herstellung eines erfindungsgemäßen Plattenhalters dienen nach Fig. 10 und 11 zwei identische Klemmelemente 1 und 1a, wobei die verschiedenen Teile des Klemmelements 1a mit denselben Bezugszeichen wie die entsprechenden Elemente des Klemmelements 1, jedoch zusätzlich mit dem Buchstaben a versehen sind. Die Klemmflächen 3 und 3a der beiden Klemmelemente 1, 1a sind einander zugewandt, wobei sie einen in Fig. 10 nach oben offenen, U-förmigen Aufnahmespalt 35 begrenzen, der nach unten durch die Schultern 6,6a begrenzt ist. Außerdem zeigen Fig. 10 und 11, daß die beiden die Scheiben 2,2a durchsetzenden, koaxial aufeinander ausgerichteten Löcher 4,4a von einer Befestigungsschraube 36 bzw. einer Hülsenmutter 37 durchragt sind, wobei die Hülsenmutter 37 vorzugsweise einen dem Loch 4 entsprechenden Querschnitt besitzt und daher undrehbar in diesem festgelegt ist.

Die beiden Klemmelemente 1,1a sind in der aus Fig. 9 bis 13 ersichtlichen Weise mit den Hebeln 14,15 verbunden. Das Loch 19 des Arms 18 des Hebels 14 ist auf die Führung 8 des Klemmelements 1 ausgerichtet und mittels eines beide durchragenden Gleitstücks 39 längs der Führung 8 verschiebbar. Das Loch 20 des Arms 17 des Hebels 14 ist auf die Führung 8a des Klemmelements 1a ausgerichtet und mittels eines beide durchragenden Gleitstücks 40 längs der Führung 8a verschiebbar. Das Loch 27 des Arms 29 des Hebels 15 ist auf die Führung 7 des Klemmelements 1 ausgerichtet und mittels eines beide durchsetzenden Gleitstücks 41 längs der Führung 7 verschiebbar. Schließlich ist das Loch 28 des Arms 30 des Hebels 15 auf die Führung 7a des Klemmelements 1a ausgerichtet und mittels eines beide durchragenden Gleitstücks 42 längs der Führung 7a verschiebbar. Daher können die beiden Klemmelemente 1,1a in Richtung eines Doppelpfeils v in Fig. 12 und 13 relativ zueinander bewegt werden, um je nach Bedarf einen größeren Aufnahmespalt 35a (Fig. 12) oder einen kleineren Aufnahmespalt 35b (Fig. 13) zu bilden. Die Hebel 14,15 werden dabei um die aus Fig. 5,6 und 8 ersichtliche Schwenkachse 33, die parallel zu den Klemmflächen 3,3a und zwischen diesen verläuft, in der aus Fig. 12 und 13 ersichtlichen Weise verschwenkt, wobei die Führungen 7,8,7a,8a und die Gleitstücke 39 bis 42 die dadurch bewirkte scherenartige Bewegung der Arme 17, 18 bzw. 29,30 ermöglichen.

Die Gleitstücke 39 bis 42 sind im Ausführungsbeispiel durch parallel zu den Klemmflächen 3,3a und zur Schwenkachse 33 (Fig. 5,7) angeordnete Bolzen realisiert, die sowohl die Löcher 19,20,27,28 als auch die zugehörigen Führungen 7,7a,8,8a durchragen. Vorzugsweise bestehen diese Bolzen aus Schraubenbolzen, deren Köpfe sich z.B. an den Unterseiten der Hebel 14,15 abstützen und auf die an den Oberseiten der Fußabschnitte 5 abgestützte Muttern aufgedreht sind, die gleichzeitig zur mechanischen Verbindung der Klemmelemente 1,1a und der Hebel 14,15 dienen.

Fig. 12 und 13 zeigen den im Ausführungsbeispiel maximalen Verstellweg der Klemmflächen 3 und 3a. Dabei ist der kleinste Abstand der Klemmflächen 3,3a im wesentlichen durch die Breite der Auflageschultern 6,6a (Fig. 10) und der größte Abstand im wesentlichen durch die Länge der Arme 17,18 und 29,30 festgelegt.

Erfindungswesentlich ist ferner, daß die Führungen 7,8,7a,8a bzw. Längsschlitze entsprechend Fig. 3 V-förmig angeordnet sind und spitze Winkel α mit der Mittelebene 11 bilden. Dadurch findet eine Übersetzung der Hebelbewegung in Richtung des Doppelpfeils v in Fig. 12 und 13 statt, d.h. die Veränderbarkeit des Abstands zwischen den Klemmflächen 3,3a ist größer, als wenn die Hebel 14,15 allein vorhanden und die Führungen 7,8,7a,8a z.B. parallel zu den Klemmflächen 3,3a angeordnet wären. Bei der aus Fig. 1 bis 13 ersichtlichen, etwa im Maßstab 1 : 1 dargestellten Anordnung können auf diese Weise Aufnahmespalte von ca. 10 mm bis 30 mm Dicke eingestellt und dennoch die Gesamtabmessungen der verschiedenen Teile vergleichsweise klein gehalten werden.

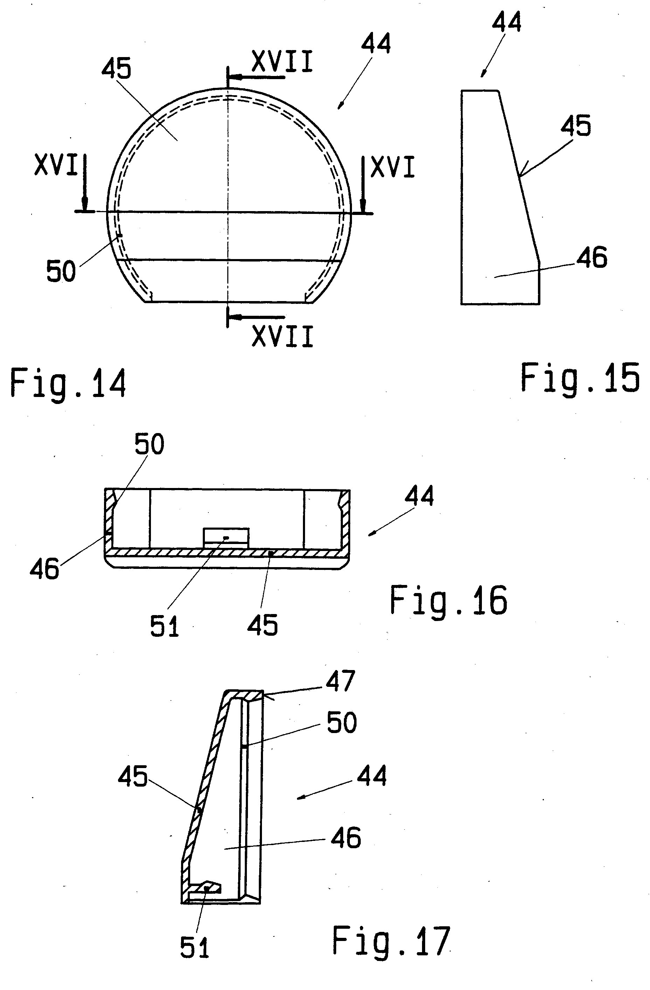

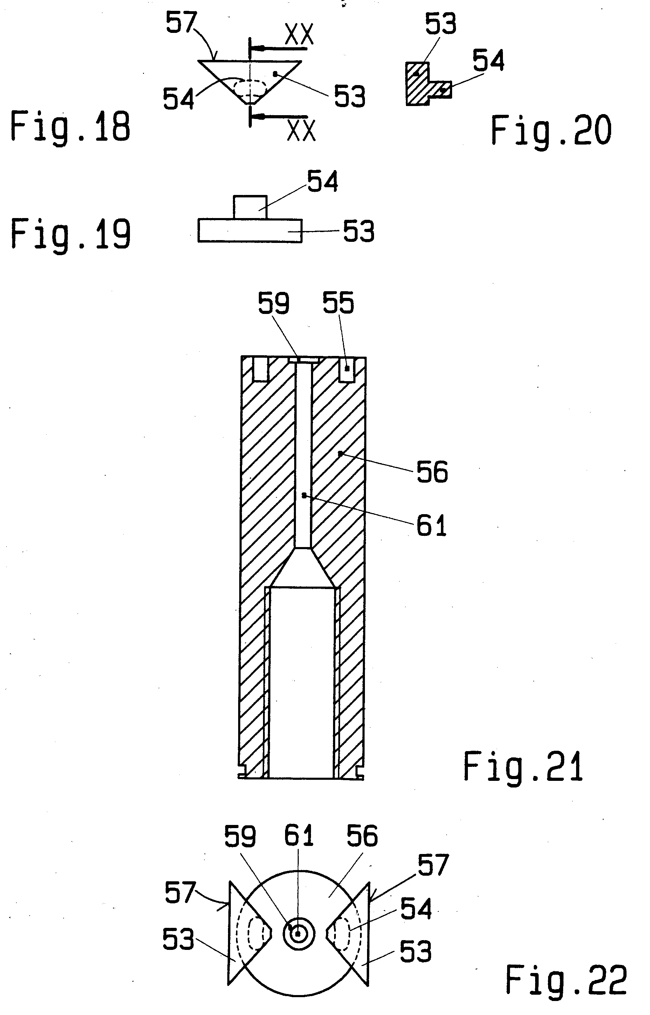

Fig. 14 bis 17 zeigen eine Abdeckkappe 44 für das Klemmelement 1 nach Fig. 1 bis 3, wobei eine entsprechende Abdeckkappe für das Klemmelement 1a identisch ausgebildet sein kann. Die Abdeckkappe 44 enthält eine äußere Scheibe 45, die im wesentlichen dieselbe äußere Kontur wie die Scheibe 2 des Klemmelements 1 besitzt und einen kragenförmig an den Rand der Scheibe 44 angeformten Mantelabschnitt 46 aufweist, dessen freie Stirnfläche 47 im auf das Klemmelement 1 aufgesetzten Zustand bündig mit dessen Klemmfläche 3 abschließt. Außerdem lassen vor allem Fig. 2 und 17 erkennen, daß die Dicke des Mantelabschnitts 46 in dem Maße von oben nach unten allmählich keilförmig zunimmt, wie der Breite des Fußabschnitts 5 des Klemmelements 1 entspricht. Dadurch kann die Abdeckkappe 44 im aufgesetzten Zustand nicht nur das Klemmelement 1, sondern auch die mit dessen Fußabschnitt 5 verbundenen Teile der Arme 18,29 der Hebel 14,15 abdecken. Daher bleiben nur die Klemmnfläche 3 und die Auflageschulter 6 frei, während der übrige Teil des Scherenmechanismus von oben her unsichtbar ist. Zur Verbindung der Abdeckkappe 44 und des Klemmelements 1 dienen zweckmäßig an beiden ausgebildete Hinterschneidungen 48,49 und 50 (Fig. 1,2,10,14 und 16), federnde Zungen 51 (Fig. 17) od. dgl., die zur Bildung von an sich bekannten Schnappverbindungen geeignet sind.

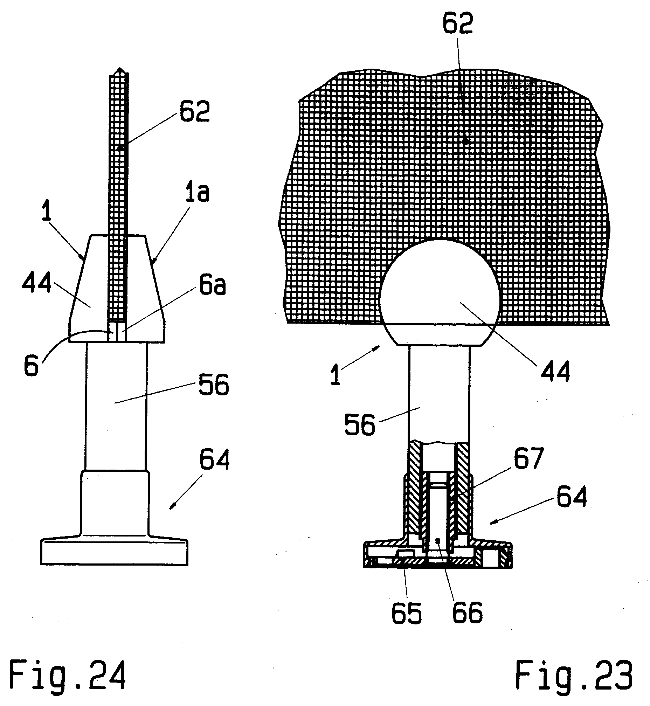

Fig. 18 bis 20 zeigen einen plattenförmigen Führungskörper 53, der in der Draufsicht die Form eines gleichschenkligen Dreiecks besitzt und an seiner Unterseite mit einem Montagezapfen 54 versehen ist, der einen unrunden Querschnitt besitzt. Zwei derartige Führungskörper 53 dienen zur Herstellung einer Zwangsführung für die Klemmelemente 1,1a bei deren Verschiebung durch die Hebel 14 und 15. Sie werden mit ihren Montagezapfen 54 so in entsprechende Aussparungen 55 gesteckt, die gemäß Fig. 21 und 22 in der oberen Stirnfläche eines Tragteils 56 ausgebildet sind, daß sie undrehbar in diesen festgelegt sind und ihre Grundflächen parallele Führungsflächen 57 bilden. Diesen sind an den Unterseiten der Klemmelemente 1,1a angebrachte, parallele Führungsstege 58 (Fig. 1,2,10,11) zugeordnet, die in einem im wesentlichen dem Abstand der Führungsflächen 57 entsprechenden Abstand angeordnet sind.

Die Montage der aus Fig. 10 und 11 ersichtlichen Baueinheit auf dem mit den Führungskörpern 53 versehenen Tragteil 56 (Fig. 21,22) erfolgt dadurch, daß der untere Kragen 32 des Hebels 15 in eine entsprechende Zentrieröffnung 59 des Tragteils 56 gesteckt und dann durch die Mittellöcher 16,26 der Hebel 14,15 hindurch eine Befestigungsschraube 60 (Fig. 11) in das Tragteil 56 gedreht wird. Dadurch ist automatisch auch die feste Lage der Führungskörper 53 auf dem Tragteil 56 gesichert. Außerdem wird die Befestigungsschraube 60 gerade so fest angezogen, daß sie sich zwar nicht selbständig lockern kann, aber die zwischen dem Schraubenkopf und dem Tragteil 56 eingespannten Hebel 14,15 gerade noch bewegt werden können, um den Abstand der Klemmflächen 3,3a einzustellen. Dabei erfolgt die Montage der Baueinheit nach Fig. 10,11 auf dem Tragteil 56 nach Fig. 21,22 so, daß die beiden Führungsstege 58 von außen an den Führungsflächen 57 der Führungskörper 53 anliegen, deren Lage im montierten Zustand auch aus Fig. 10 bis 13 ersichtlich ist, obwohl die Führungskörper 53 dort jeweils in einem nicht auf dem Tragteil 56 befestigten Zustand gezeigt sind. Dadurch können im montierten Zustand die beiden Klemmelemente 1,1a nur parallel zu den Führungsflächen 57 in Richtung des Pfeils v hin- und herbewegt werden. Das führt zu dem Vorteil, daß die beiden Löcher 4,4a in den Klemmelementen 1,1a automatisch immer koaxial aufeinander ausgerichtet sind und kein Problem beim Einführen der Befestigungsschraube 36 (Fig. 10) auftreten kann. Sind die Führungskörper 53 nicht vorhanden, könnten die Klemmelemente 1,1a im montierten Zustand auch senkrecht zum Pfeil v und parallel zu den Klemmflächen 3,3a relativ zueinander bewegt werden, wodurch die koaxiale Lage der Löcher 4,4a ungewollt verlorengehen könnte.

Als Befestigungsschraube 60 (Fig 11) wird zweckmäßig eine Metallschraube verwendet, während das Tragteil 56 aus Kunststoff hergestellt wird und ein Loch 61 (Fig. 19) ohne Gewinde erhält, in dem die Befestigungsschraube 60 selbstschneidend und mit einem vorgewählten Drehmoment befestigt wird.

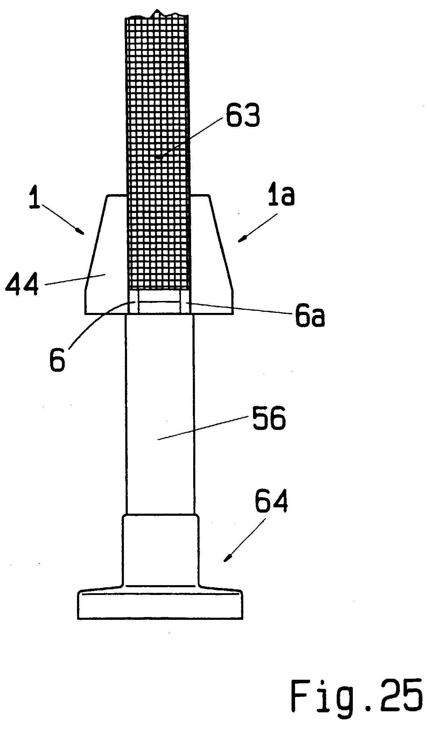

Fig. 23 bis 25 zeigen den erfindungsgemäßen Plattenhalter im montierten Zustand in Verbindung mit einer Platte 62 geringer Dicke und einer Platte 63 größerer Dicke. Das Tragteil 56 bildet hier das Oberteil eines Fußes 64, der eine am Boden zu befestigende Rosette 65 mit einem vertikal aufragenden Gewindebolzen 66 aufweist, auf den eine am Tragteil 56 befestigte Gewindehülse 67 aufgeschraubt wird, um den Plattenhalter in der Höhe verstellen zu können.

Die Montage der Platten 62 bzw. 63 erfolgt zweckmäßig dadurch, daß nach der Befestigung des Tragteils 56 am Boden und der Plattenhalter an den Tragteilen 56 zunächst alle Paare von Klemmelementen 1,1a auf die größte Dicke ihrer Aufnahmespalte 35 eingestellt werden, indem die Klemmplatten 1,1a manuell auseinandergezogen werden. Anschließend werden die vormontierten Abdeckkappen 44 demontiert und die Platten 62 bzw. 63 in die Aufnahmespalte 35 eingesetzt, bis sie auf den Auflageschultern 6,6a aufliegen. Anschließend werden, wiederum manuell, die beiden Klemmelemente 1,1a gegeneinandergedrückt und die Befestigungsschrauben 36 durch entsprechend vorhandene oder noch zu bohrende Löcher der Platten 62,63 gesteckt und festgezogen. Abschließend werden die Abdeckkappen 64 aufgedrückt.

Die beschriebene Ausführungsform bringt zahlreiche Vorteile mit sich. Zunächst ist vorteilhaft, daß für viele Plattenstärken stets dieselben Klemmelemente und Plattenhalter verwendet werden können und allenfalls unterschiedlich lange Befestigungsschrauben 36 (Fig. 10) benötigt werden, die den Plattenhaltern beigepackt werden können. Außerdem ist eine Anpassung des Plattenhalters an unterschiedliche Plattenstärken auch an der Baustelle ohne zusätzlichen Arbeitsaufwand möglich, und die Plattenhalter können weitgehend vormontiert werden. Trotz des großen Verstellwegs ist es weiter mit wenigen Bauteilen möglich, dem Plattenhalter ein formschönes Aussehen zu geben und konstruktive Teile weitgehend unsichtbar anzuordnen, wobei auch die Abdeckkappen 44 vergleichsweise klein gehalten werden können. Weiterhin ist klar, daß der Plattenhalter auch in einer um 180° gedrehten Stellung im Vergleich zu Fig. 23 bis 25 angewendet werden kann, wenn er z.B. am oberen Rand einer Platte montiert und dazu an einem oberhalb der Platte befindlichen Wand- oder Konstruktionsteil befestigt werden soll.

Die Erfindung ist nicht auf das beschriebene Ausführungsbeispiel beschränkt, das auf vielfache Weise abgewandelt werden kann. Anstelle der beiden einstückig, z.B. als Kunststoff-Spritzgußteile hergestellten Klemmelemente 1,1a könnten auf jeder Seite der zu halternden Platte auch z.B. je zwei, einzeln mit den Hebelarmen verbundene Klemmstäbe od. dgl. vorgesehen werden, insbesondere wenn nur kleine Verstellwege erforderlich sind. In diesem Fall würde jede Klemmfläche 3,3a nicht durchgehend, sondern durch zwischen den Klemmstäben befindliche Zwischenräume unterbrochen sein. Außerdem würde die Länge des Verstellwegs allein durch die scherenartig verbundenen Hebel 14, 15 festgelegt. Weiterhin wäre es, falls nur Kleine Verstellwege erforderlich sind, auch möglich, beispielsweise nur je ein Paar von Führungen 7,8a oder 8,7a vorzusehen und die keine Führungen aufweisenden Teile der Klemmelemente 1,1a lediglich gelenkig mit den zugehörigen Armen der Hebel 14, 15 zu verbinden. Weiter wäre es möglich, mehrere der genannten Klemmstäbe zu einem Klemmelement zu verbinden. Außerdem ist Klar, daß die beschriebenen Führungen 7,7a,8,8a und Gleitkörper 39 bis 42 zahlreiche andere Formen aufweisen und z. B. als Nuten und darin angeordnete Nutensteine ausgebildet sein können. Schließlich versteht sich, daß die einzelnen Merkmale der Erfindung auch in anderen als den beschriebenen und in der Zeichnung dargestellten Kombinationen verwendet werden können.

## Patentansprüche

1. Platterhalter mit wenigstens zwei Klemmelementen (1,1a), die einen Aufnahmespalt (35) für eine Platte (62,63) begrenzende Klemmflächen (3,3a) aufweisen, dadurch gekennzeichnet, daß die Klemmelemente (1,1a) an zur Einstellung der Dicke des Aufnahmespalts (35) bestimmten, scherenartig miteinander verbundenen, je zwei Arme (17,18 bzw. 29,30) aufweisenden Hebeln (14,15) montiert und die Hebel (14,15) um eine im wesentlichen parallel zu den Klemmflächen (3,3a) und zwischen diesen verlaufende Schwenkachse (33) schwenkbar miteinander verbunden sind.

2. Plattenhalter nach Anspruch 1, dadurch gekennzeichnet, daß zwei je eine Klemmfläche (3,3a) bildende Klemmelemente (1,1a) vorgesehen sind.

3. Plattenhalter nach Anspruch 2, dadurch gekennzeichnet, daß ein Arm (17,29) jedes Hebels (14,15) ein Gleitstück (40,41) und jedes Klemmelement eine Führung (7,8a) aufweist, in der eines der Gleitstücke (40,41) gleitend gelagert ist.

4. Plattenhalter nach Anspruch 2, dadurch gekennzeichnet, daß jeder Arm (17,18,29,30) jedes Hebels (14,15) ein Gleitstück (39 bis 42) und jedes Klemmelement (1,1a) zwei Führungen (7,8,7a,8a) aufweist, in denen an unterschiedlichen Hebeln (14,15) angebrachte Gleitstücke (39 bis 42) gleitend gelagert sind.

5. Plattenhalter nach Anspruch 3 oder 4, dadurch gekennzeichnet, daß die Führungen (7,8 bzw. 7a,8a) Längsachsen (9,10) aufweisen, die mit einer senkrecht zu den Klemmflächen (3,3a) angeordneten Mittelebene (11) spitze Winkel (α) bilden.

6. Plattenhalter nach Anspruch 5, dadurch gekennzeichnet, daß die Führungen (7,8 bzw. 7a,8a) jedes Klemmelements (1,1a) V-förmig zueinander und spiegelsymmetrisch zur Mittelebene (11) angeordnet sind.

7. Plattenhalter nach einem der Ansprüche 3 bis 6, dadurch gekennzeichnet, daß die Führungen (7,8,7a,8a) aus Langlöchern und die Gleitstücke (39 bis 41) aus diese durchragenden Bolzen bestehen, die parallel zur Schwenkachse (33) angeordnete Achsen aufweisen.

8. Plattenhalter nach Anspruch 7, dadurch gekennzeichnet, daß die Bolzen aus der Verbindung der Hebel (14,15) mit den Klemmelementen (1,1a) dienenden Schraubenbolzen bestehen.

9. Plattenhalter nach einem der Ansprüche 3 bis 8, dadurch gekennzeichnet, daß die Führungen (7,8 bzw. 7a,8a) in quer zu den Klemmflächen (3,3a) nach außen ragenden Fußabschnitten (5,5a) der Klemmelemente (1,1a) ausgebildet sind.

10. Plattenhalter nach einem der Ansprüche 1 bis 9, dadurch gekennzeichnet, daß wenigstens einer der Hebel (14,15) in einem mittleren Abschnitt mit einer Ausnehmung (21,31) versehen und der andere Hebel (14,15) in dieser Ausnehmung gelagert ist.

11. Plattenhalter nach einem der Ansprüche 1 bis 10, dadurch gekennzeichnet, daß die beiden Hebel (14,15) mittels einer in der Schwenkachse (33) liegenden Schraube (60) an einem Tragteil (56) schwenkbar befestigt sind.

12. Plattenhalter nach einem der Ansprüche 1 bis 11, dadurch gekennzeichnet, daß den Klemmelementen (1,1a) eine den Aufnahmespalt (35) durchragende Befestigungsschraube (36) für die Platte (62,63) zugeordnet ist.

13. Plattenhalter nach einem der Ansprüche 1 bis 12, dadurch gekennzeichnet, daß jedes Klemmelement (1,1a) mit einer dem Aufnahmespalt (35) zugewandten Auflageschulter (6) für die Platte (62,63) versehen ist.

14. Plattenhalter nach einem der Ansprüche 1 bis 13, dadurch gekennzeichnet, daß jedes Klemmelement (1, 1a) mit einer bis zu seiner Klemmfläche (3,3a) reichenden Abdeckkappe (44) versehen ist.

15. Plattenhalter nach einem der Ansprüche 4 bis 14, dadurch gekennzeichnet, daß den beiden Hebeln (14,15) zur Zwangsführung der Klemmelemente (1,1a) bestimmte Führungskörper (53) zugeordnet sind und die Klemmelemente (1,1a) mit diesen zusammenwirkende Führungsstege (58) aufweisen.
